# EUROPEAN PATENT APPLICATION

(11) **EP 2 202 685 A1**
(43) Date of publication of application: **30.06.2010**
(21) Application number: 08838690.9
(22) Date of filing: 14.10.2008
(51) Int. Cl.: G06T 7/00, G06F 21/20

(54) **REGISTRATION DEVICE, AUTHENTICATION DEVICE, REGISTRATION METHOD AND AUTHENTICATION METHOD**

(30) Priority: 15.10.2007 JP 2007268280
(71) Applicant: Sony Corporation, Tokyo 108-0075 (JP)
(72) Inventor: ABE, Hiroshi, Tokyo 108-0075 (JP)
(74) Representative: Merryweather, Colin Henry
(86) International application number: PCT/JP2008/068925
(87) International publication number: WO 2009/051250

(57) **Abstract**

The present invention suggests a registration apparatus and a registration method that are capable of reducing occupancy of a memory storing biometric information, and an authentication apparatus and an authentication method that are capable of shortening an authentication time. There are provided a non-vein information obtaining unit (22) that obtains non-vein information that is not about a vein portion from vein image data, a non-vein information registration unit (23) that registers the non-vein information obtained by the non-vein information obtaining unit (22) in an HDD (14), a patterning unit (31) that is included in a security chip (15) in which a security level is higher than in the non-vein information obtaining unit (22), the non-vein information registration unit(23), and the HDD (14) and that extracts information about veins from the vein image data, and a vein information registration unit (32) that registers the information about the veins extracted by the patterning unit (31) in a memory (33).

## Description

### Technical Field

The present invention relates to a registration apparatus, an authentication apparatus, a registration method, and an authentication method, which are preferably applied to biometric authentication, for example.

### Background Art

Conventionally, blood vessels are employed as one of targets of biometric authentication. As an authentication apparatus that employs blood vessels as a target of biometric authentication, there has been suggested an apparatus that performs Hough transform on image data obtained as a result of capturing an image of a finger, that extracts a parameter while changing an extraction threshold so that the parameter obtained as a result of the transform has a predetermined value, and that uses the extracted parameter as registration data or data that should be authenticated as registration data (e.g., see Patent Document 1).

This authentication apparatus performs preprocessing in which it is determined whether an extraction threshold that is set when a parameter is extracted from data that should be authenticated is within a range of allowable extraction thresholds. In a case where the extraction threshold is within the range of allowable extraction thresholds, the authentication apparatus authenticates the data that should be authenticated using a parameter.

Therefore, in a case where the amount of component itself corresponding to a biometric identification target is small or where the amount of noise component other than the biometric identification target is extremely large, the extraction threshold that is set when a parameter is extracted from data that should be authenticated is out of the range of extraction thresholds, and this authentication apparatus does not perform authentication using a parameter. Accordingly, the probability of erroneous determination in which a person is authenticated as another person can be decreased, whereby the authentication accuracy can be increased.
Patent Document 1: Japanese Unexamined Patent Application Publication No. 2007-233574

Meanwhile, in the authentication apparatus having the foregoing configuration, preprocessing using an extraction threshold and an authentication process using a parameter are performed by one processing unit, which causes a problem in that an authentication time is taken.

Also, in this authentication apparatus, extraction thresholds and parameters need to be registered in one memory, which causes a problem in that the memory is bloated.

Particularly, since veins are invariant and unchangeable during the whole life, preprocessing and an authentication process are performed often in a module having a high security level, such as a tamper-resistant security chip for preventing an access from a third party.

In this case, the processing ability of the module having a high security level cannot be easily enhanced, which increases the possibility that an authentication process time is taken compared to a case where the module is not applied.

Also, in this case, a memory capacity of the module having a high security level is often small, which increases the possibility that the memory occupancy of extraction thresholds and parameters increases compared to a case where the module is not applied.

### Disclosure of Invention

The present invention has been made in view of the above-described points, and is directed to suggesting a registration apparatus and a registration method that are capable of reducing the occupancy of a memory for storing biometric information and an authentication apparatus and an authentication method that are capable of shortening an authentication time.

In order to solve the foregoing problems, the present invention is a registration apparatus that is provided with an obtaining unit that obtains non-biometric information that is not about a living body portion serving as a target of biometric authentication from biometric image data, a non-biometric registration unit that registers the non-biometric information obtained by the obtaining unit in a first storage unit, an extracting unit that is included in a block in which a security level is higher than in the obtaining unit, the non-biometric registration unit, and the first storage unit and that extracts information about a living body from the biometric image data, and a biometric registration unit that is included in the block and that registers the information about the living body extracted by the extracting unit in a second storage unit in the block.

Also, the present invention is an authentication apparatus that is provided with an obtaining unit that obtains non-biometric information that is not about a living body portion serving as a target of biometric authentication from biometric image data, a non-biometric determination unit that determines whether the non-biometric information obtained by the obtaining unit matches non-biometric information registered in a first storage unit, an extracting unit that is included in a block in which a security level is higher than in the obtaining unit, the non-biometric determination unit, and the first storage unit and that extracts information about a living body from the biometric image data, and a biometric determination unit that is included in the block and that determines, in a case where the non-biometric determination unit determines matching, whether the information about the living body extracted by the extracting unit matches information about a living body registered in a second storage unit in the block.

Furthermore, the present invention is a registration method that is provided with a first step of obtaining, with an obtaining unit, non-biometric information that is not about a living body portion serving as a target of biometric authentication from biometric image data, a second step of registering, with a non-biometric registration unit, the non-biometric information obtained in the first step in a first storage unit to use the non-biometric information in an authentication process before a biometric authentication process, a third step of extracting, with an extracting unit that is included in a block in which a security level is higher than in the obtaining unit, the non-biometric registration unit, and the first storage unit, information about a living body from the biometric image data, and a fourth step of registering, with a biometric registration unit that is included in the block, the information about the living body extracted in the third step in a second storage unit in the block to use the information in a biometric authentication process.

Furthermore, the present invention is an authentication method that is provided with a first step of obtaining, with an obtaining unit, non-biometric information that is not about a living body portion serving as a target of biometric authentication from biometric image data, a second step of determining, with a non-biometric determination unit, whether the non-biometric information obtained in the first step matches non-biometric information registered in a first storage unit, a third step of extracting, with an extracting unit that is included in a block in which a security level is higher than in the obtaining unit, the non-biometric determination unit, and the first storage unit, information about a living body from the biometric image data, and a fourth step of determining, with a biometric determination unit that is included in the block, in a case where the non-biometric determination unit determines matching, whether the information about the living body extracted in the third step matches information about a living body registered in a second storage unit in the block.

According to the present invention, non-biometric information and biometric information can be registered in different areas, and also authentication using the non-vein information and authentication using the vein information can be performed in a sharing manner. Accordingly, a registration apparatus and a registration method that are capable of reducing the occupancy of a memory for storing biometric information and an authentication apparatus and an authentication method that are capable of shortening an authentication time can be realized.

### Brief Description of Drawings

Fig. 1 is an outline view illustrating an entire configuration of a PMI system.
Fig. 2 is an outline view illustrating a configuration of an authentication apparatus in this embodiment.
Fig. 3 is an outline view illustrating a functional configuration of a control unit and a security chip in a registration mode.
Fig. 4 is a flowchart illustrating a registration process procedure.
Fig. 5 is an outline view illustrating a functional configuration of the control unit and the security chip in an authentication mode.
Fig. 6 is a flowchart illustrating an authentication process procedure.

### Best Mode for Carrying Out the Invention

Hereinafter, an embodiment of the present invention will be described in detail with reference to the drawings.

### (1) Entire configuration of PMI system

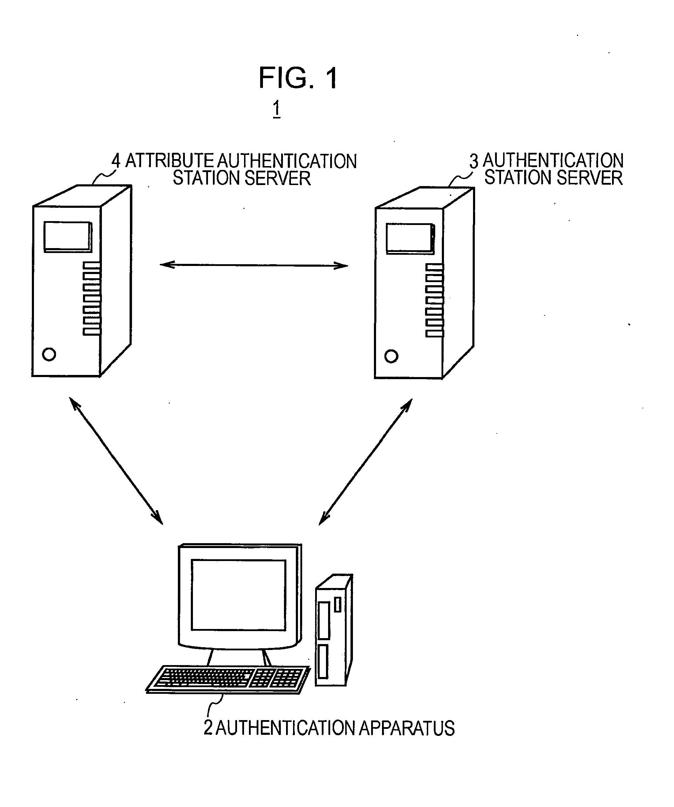

Fig. 1 illustrates an entire configuration of a privilege management infrastructure (hereinafter this is called PMI) system 1 according to this embodiment. This PMI system 1 is constituted by an authentication apparatus 2, an authentication station server 3, and an attribute authentication station server 4.

The authentication apparatus 2 is configured including a personal computer, for example, obtains a public key certificate PKC issued by the authentication station server 3, and obtains an attribute certificate AC issued by the attribute authentication station server 4.

The authentication station server 3 is a third-party agency with respect to the authentication apparatus 2 and the attribute authentication station server 4, and issues a public key certificate PKC to the authentication apparatus 2 and the attribute authentication station server 4. This public key certificate PKC is a certificate for certifying that a public key corresponds to a secret key owned by a user, and includes a user ID, such as the name, belonging, and mail address of the user, a serial number, the name and public key of the authentication station server 3, and the like, to which a digital signature is added. The authentication station server 3 generates a public key certificate PKC added with a digital signature, thereby assuring the generated public key certificate PKC.

The attribute authentication station server 4 is a third-party agency with respect to the authentication apparatus 2 and the authentication station server 3, and issues an attribute certificate AC to the authentication apparatus 2. This attribute certificate AC includes the name of an issuer and the serial number of a public key certificate PKC that links to a public key certificate PKC given from the authentication station server 3, various pieces of attribute information of a user, the name of the attribute authentication station server 4, and the like, to which a digital signature is added. The attribute authentication station server 4 generates an attribute certificate AC added with a digital signature, thereby assuring the generated attribute certificate AC.

### (2) Entire configuration of authentication apparatus

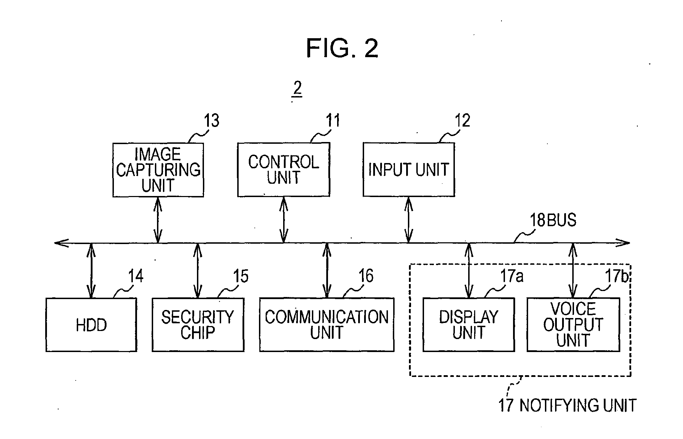

As illustrated in Fig. 2, the authentication apparatus 2 is constituted by an input unit 12, an image capturing unit 13, a hard disk drive (hereinafter this is called HDD) 14, a security chip 15, a communication unit 16, and a notifying unit 17, each of which is connected to a control unit 11 via a bus 18.

The control unit 11 is constituted as a computer that includes a CPU (Central Processing Unit) for controlling the entire authentication apparatus 2, a ROM (Read Only Memory) for storing various programs, setting information, and the like, and a RAM (Random Access Memory) serving as a work memory for the CPU.

To this control unit 11, an execution command of a mode for registering blood vessels of a user as a target to be registered (hereinafter the user is called a registrant and the mode is called a registration mode) or an execution command of a mode for identifying a registrant himself/herself (hereinafter this is called an authentication mode) is input from the input unit 12 in accordance with a user operation.

The control unit 11 determines a mode that should be executed on the basis of the execution command, appropriately controls the image capturing unit 13, the HDD 14, the security chip 15, the communication unit 16, and the notifying unit 17 on the basis of a program corresponding to a result of this determination, and executes the registration mode or the authentication mode.

The image capturing unit 13 applies, onto a surface on which a finger should be placed (hereinafter this is called a finger placement surface), light having a wavelength included in a wavelength range (700 [nm] to 900 [nm]) having a characteristic of being uniquely absorbed by both deoxygenated hemoglobin and oxygenated hemoglobin (hereinafter this is called near infrared light).

Also, the image capturing unit 13 obtains an image of veins in a living body portion placed on the finger placement surface (hereinafter this is called a vein image) by generating the image as data (hereinafter this is called vein image data), and transmits the vein image data to the control unit 11 and the security chip 15.

The HDD 14 stores, as information other than information about veins (hereinafter this is called non-vein information), information about a finger shown in vein image data (hereinafter this is called finger information), a condition set in the image capturing unit 13 by the control unit 11 (hereinafter this is called an image capturing condition), and the like.

The security chip 15 has a computer including a CPU, a ROM for storing various programs, setting information, and the like, a RAM serving as a work memory for the CPU, and a memory for storing data, and is constituted as a tamper-resistant chip capable of preventing forgery, falsification, tampering, and the like, in which analysis of an internal structure or data that is being handled is made impossible or in which the chip itself is physically destroyed when an unauthorized access from the outside occurs.

This security chip 15 generates information about veins shown in vein image data (hereinafter this is called vein information) and records the vein information in the memory in the security chip 15.

The communication unit 16 transmits/receives various data to/from the authentication station server 3 and the attribute authentication station server 4 outside the authentication apparatus 2 via predetermined communication paths.

The notifying unit 17 includes a display unit 17a and a voice output unit 17b. The display unit 17a displays, on a display screen, characters and figures based on display data given from the control unit 11. On the other hand, the voice output unit 17b outputs, from a speaker, voice based on voice data given from the control unit 11.

### (3) Registration mode

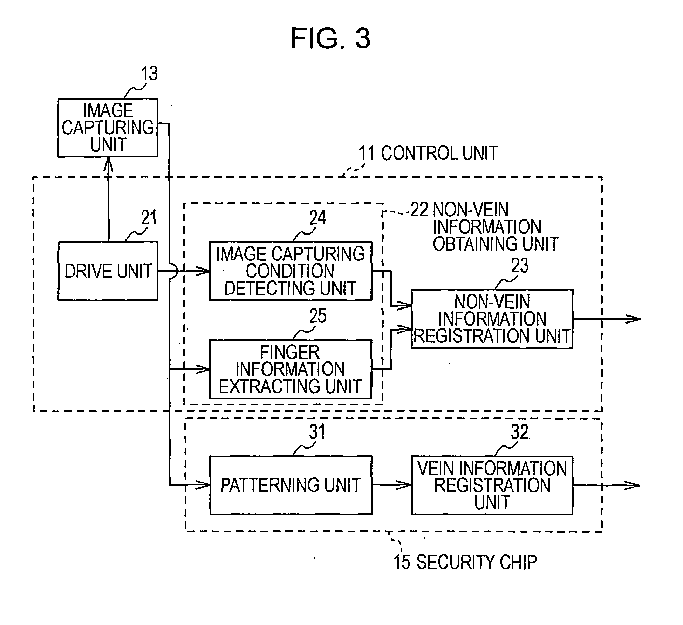

Next, the registration mode will be described. After determining the registration mode as a mode that should be executed, the control unit 11 provides an instruction to place a finger on the finger placement surface via the notifying unit 17 and then functions as a drive unit 21, a non-vein information obtaining unit 22, and a non-vein information registration unit 23, as illustrated in Fig. 3. Also, the security chip 15 functions as a patterning unit 31 and a vein information registration unit 32.

In this case, the drive unit 21 drives a light source in the image capturing unit 13, thereby causing near infrared light to be applied onto the finger placement surface. Also, the drive unit 21 adjusts a lens position of an optical lens in the image capturing unit 13 so that a subject is focused. Furthermore, the drive unit 21 adjusts an aperture value of an aperture in the image capturing unit 13 and a shutter speed for an image capturing device (exposure time) on the basis of vein image data.

An image capturing condition detecting unit 24 of the non-vein information obtaining unit 22 detects a focal length on the basis of a lens position or the like adjusted by the drive unit 21, detects an exposure value (EV) on the basis of an aperture value and a shutter speed, generates the detected exposure value EV and focal length as image capturing condition information, and transmits the information to the non-vein information registration unit 23.

A finger information extracting unit 25 of the non-vein information obtaining unit 22 extracts, as a result of image capturing performed by the image capturing unit 13, a finger width and a luminance distribution (hereinafter this is called a histogram), for example, that represent characteristics of a user, from the vein image data given from the image capturing unit 13, and transmits the extracted finger width and histogram serving as finger information to the non-vein information registration unit 23.

That is, the non-vein information obtaining unit 22 obtains image capturing condition information using the image capturing condition detecting unit 24 and obtains finger information using the finger information extracting unit 25, and transmits the obtained image capturing condition information and finger information as non-vein information to the non-vein information registration unit 23.

The non-vein information registration unit 23 outputs the non-vein information given from the non-vein information obtaining unit 22 to the attribute authentication station server 4 via the communication unit 16.

At that time, the non-vein information registration unit 23 outputs the non-vein information to the attribute authentication station server 4. At the same time, the non-vein information registration unit 23 outputs the serial number of a public key certificate PKC issued by the authentication station server 3, the serial number being input via the input unit 12, for example, to the attribute authentication station server 4, and waits for an attribute certificate AC.

In the attribute authentication station server 4, a public key certificate PKC corresponding to the serial number of the public key certificate PKC given from the non-vein information registration unit 23 is obtained from the authentication station server 3.

Also, in the attribute authentication station server 4, the non-vein information given from the non-vein information registration unit 23 is written in an attribute information area of the attribute certificate AC corresponding to the public key certificate PKC, and the attribute certificate AC that is obtained through digital signature using a secret key for signature is output to the authentication apparatus 2.

When receiving the attribute certificate AC given from the attribute authentication station server 4 via the communication unit 16, the non-vein information registration unit 23 stores the attribute certificate AC in the HDD 14 to register it.

On the other hand, the patterning unit 31 extracts, as a result of image capturing in the image capturing unit 13, an image of a vein portion (hereinafter this is called a vein image) shown in a vein image from vein image data given from the image capturing unit 13.

In this embodiment, the patterning unit 31 performs preprocessing on vein image data as necessary, such as image rotation correction, noise reduction, and image clipping, and then performs a sharpening process using a differentiation filter, such as a Gaussian filter or a Log (Laplacian Of Gaussian) filter, for example. Also, the patterning unit 31 binarizes the vein image on which the sharpening process has been performed, and constantly thins a vein width, with the center or the peak of luminance of veins shown in the binarized vein image being a reference. Thus, in the patterning unit 31 according to this embodiment, vein information, which is a binary image in which the line widths of veins are constant, is extracted from a multi-level vein image.

The vein information registration unit 32 stores, in the memory of the security chip 15, vein information associated with the non-vein information registered by the non-vein information registration unit 23, thereby registering the vein information.

In this way, the control unit 11 can execute the registration mode.

### (4) Registration process procedure

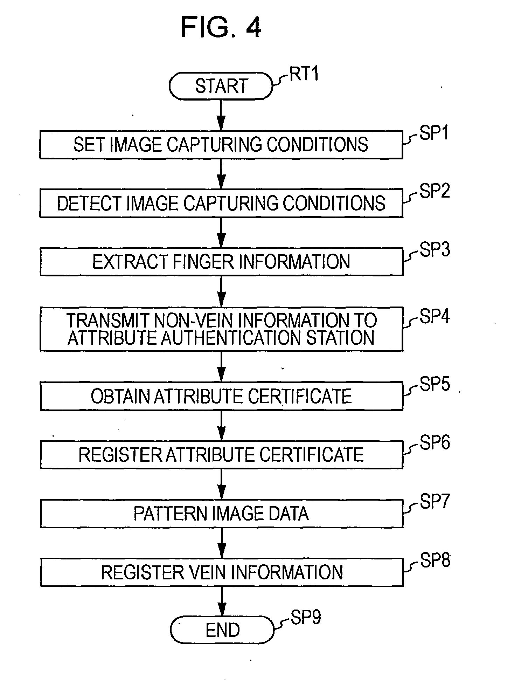

Next, a registration process procedure of the registration mode in the control unit 11 will be described with reference to the flowchart illustrated in Fig. 4.

That is, upon receiving an execution command of the registration mode from the input unit 12, the control unit 11 starts this routine RT1 and moves to the next step SP1 to set a focal length, an aperture value, a shutter speed, etc., in the image capturing unit 13, and moves to the next step SP2.

In this step SP2, the control unit 11 detects image capturing conditions, including an exposure value EV and a focal length, that are set when the image capturing unit 13 captures a vein image, and moves to the next step SP3.

In this step SP3, the control unit 11 extracts, from vein image data given as a result of image capturing in the image capturing unit 13, a finger width and a histogram serving as finger information, and moves to the next step SP4.

In this step SP4, the control unit 11 obtains, as non-vein information, non-vein information including image capturing condition information including the image capturing conditions detected in step SP2 and the finger information extracted in step SP3, outputs the obtained non-vein information and the serial number of the public key certificate PKC input via the input unit 12 to the attribute authentication station server 4 via the communication unit 16, and moves to the next step SP5.

In this step SP5, the control unit 11 receives the attribute certificate AC given from the attribute authentication station server 4 via the communication unit 16 to obtain it, and moves to the next step SP6.

In this step SP6, the control unit 11 stores the attribute certificate AC given from the attribute authentication station server 4 in the HDD 14 to register it, and moves to the next step SP7.

In this step SP7, the security chip 15 patterns the vein image data given as a result of image capturing in the image capturing unit 13, thereby extracting, from a multi-level vein image, vein information which is a binary image in which the line widths of veins are constant, and moves to the next step SP8.

In this step SP8, the security chip 15 stores the vein information in the memory of the security chip 15, and moves to the next step SP9 to end the process.

### (5) Authentication mode

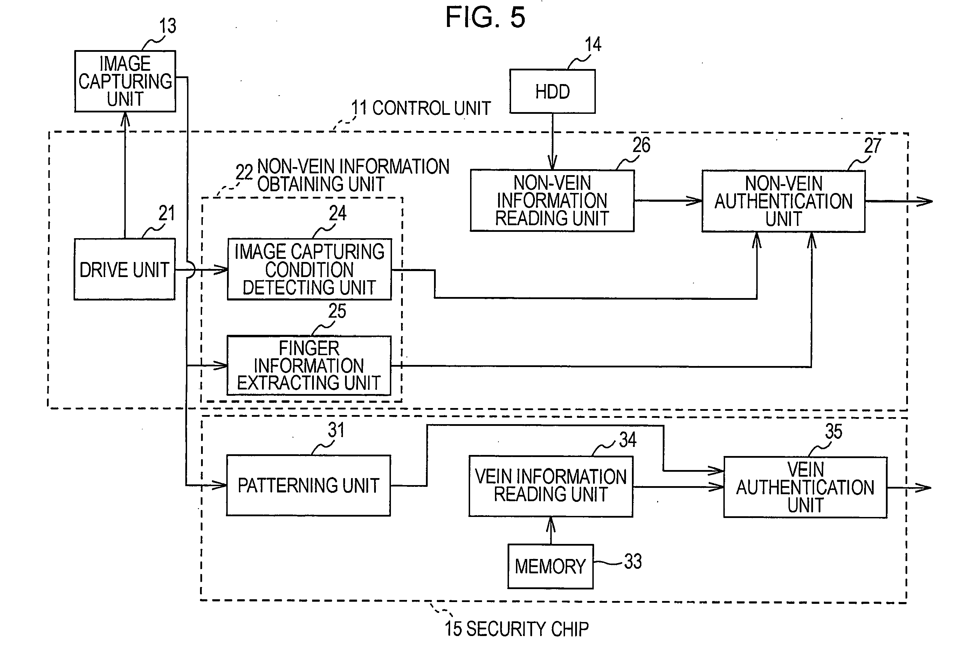

Next, the authentication mode will be described. After determining the authentication mode as a mode that should be executed, the control unit 11 provides an instruction to place a finger on the finger placement surface via the notifying unit 17, and then functions as the drive unit 21, the non-vein information obtaining unit 22, a non-vein information reading unit 26, and a non-vein authentication unit 27, as illustrated in Fig. 5 in which parts corresponding to those in Fig. 3 are denoted by the same reference numerals. Also, the security chip 15 functions as the patterning unit 31, a memory 33, a vein information reading unit 34, and a vein authentication unit 35.

In this case, as in the above-described registration mode, the drive unit 21 drives the image capturing unit 13. The image capturing condition detecting unit 24 of the non-vein information obtaining unit 22 detects image capturing conditions including an exposure value EV and a focal length that are set by the drive unit 21 and extracts the image capturing conditions as image capturing condition information. Also, the finger information extracting unit 25 of the non-vein information obtaining unit 22 extracts, from the vein image data given from the image capturing unit 13, finger information including a finger width and a histogram. That is, the non-vein information obtaining unit 22 obtains, as non-vein information, the image capturing condition information and finger information, and transmits the obtained non-vein information to the non-vein authentication unit 27.

Also, the non-vein information reading unit 26 reads the attribute certificate AC registered in the HDD 14 and transmits the attribute certificate AC to the non-vein authentication unit 27.

The non-vein authentication unit 27 verifies the attribute certificate AC given from the non-vein information reading unit 26 using a public key for signature of the attribute authentication station server 4. Then, in a case where the verified attribute certificate AC is not tampered, the non-vein authentication unit 27 determines whether the non-vein information described in the attribute certificate AC matches the non-vein information to be authenticated given from the non-vein information obtaining unit 22.

Here, in a case where it is determined that the both pieces of non-vein information do not match each other, which means that the pieces of non-vein information are different from each other without the need for performing authentication using vein information, whereby the non-vein authentication unit 27 determines that the possibility of an identical person is extremely low in a stage before authentication using vein information, and, as a process of failure in authentication, provides a visual and acoustic notification indicating that the person is not authenticated as a registrant, for example, via the display unit 17a and the voice output unit 17b.

In contrast to this, in a case where it is determined by the non-vein authentication unit 27 that the both pieces of non-vein information match each other, the control unit 11 causes the security chip 15 to perform authentication using vein information.

In the patterning unit 31, a process similar to the process performed on vein image data in the above-described registration mode is performed, whereby vein information, which is a binary image in which the line widths of veins are constant, is extracted from the multi-level vein image captured by the image capturing unit 13, and the extracted vein information is transmitted to the vein authentication unit 35.

The vein information reading unit 34 reads the vein information registered in the memory 33 and transmits the read vein information to the vein authentication unit 35.

The vein authentication unit 35 determines whether the vein information registered in the memory 33 matches the vein information to be authenticated extracted by the patterning unit 31.

Here, in a case where the vein authentication unit 35 determines that the both pieces of vein information do not match each other, the vein authentication unit 35 determines that the person cannot be authenticated as a registrant, and, as a process of failure in authentication, provides a visual and acoustic notification indicating that the person is not authenticated as a registrant, for example, via the display unit 17a and the voice output unit 17b.

In contrast to this, in a case where the vein authentication unit 35 determines that the both pieces of vein information match each other, the vein authentication unit 35 determines that the person can be authenticated as a registrant, and transmits data for causing a process of success in authentication to be performed to the control unit 11.

The control unit 11 performs, as a process of success in authentication, a process of opening a closed door only for a certain period, or canceling an operation mode of a target to be limited, for example, on the basis of the data given from the vein authentication unit 35.

In this way, this control unit 11 can execute the authentication mode.

### (6) Authentication process procedure

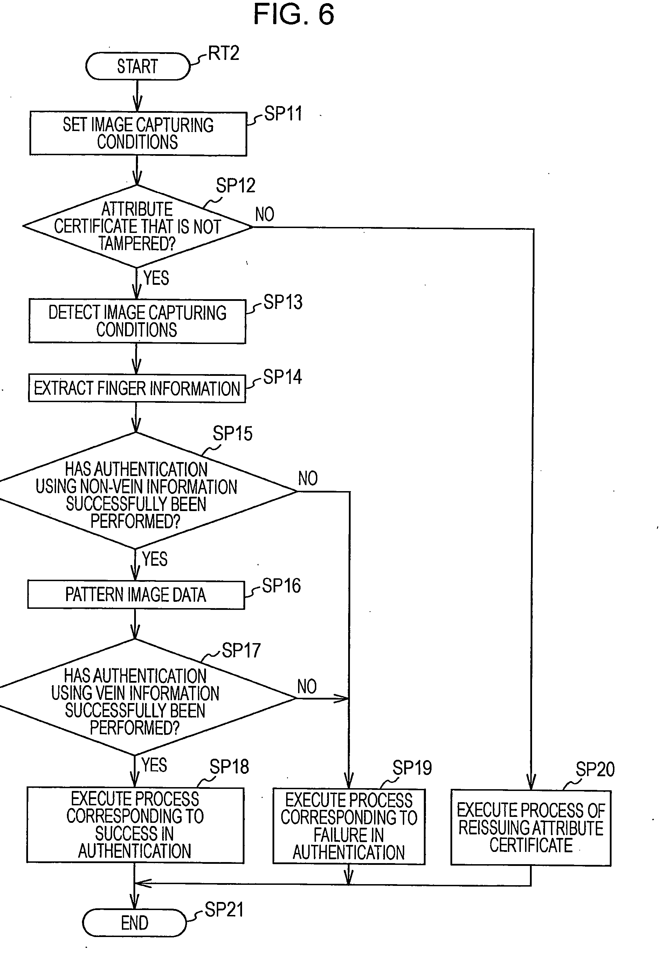

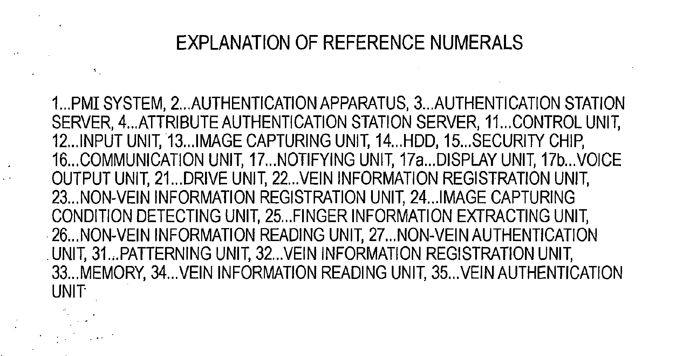

Next, an authentication process procedure of the authentication mode in the control unit 11 will be described with reference to the flowchart illustrated in Fig. 6.

That is, upon receiving an execution command of the authentication mode from the input unit 12, the control unit 11 starts this routine RT2 and moves to the next step SP11 to set a focal length, an aperture value, a shutter speed, etc., in the image capturing unit 13, and moves to the next step SP12.

In this step SP12, the control unit 11 reads the attribute certificate AC recorded in the HDD 14 and verifies the read attribute certificate AC using a public key for signature of the attribute authentication station server 4. Then, the control unit 11 determines whether the attribute certificate AC is a certificate that is not tampered. If a negative result is obtained, which means that the attribute certificate AC is tampered, and the control unit 11 moves to step SP20.

In contrast to this, if a positive result is obtained in step SP12, which means that the attribute certificate AC is not tampered, and the control unit 11 reads non-vein information from the attribute certificate AC and moves to the next step SP13.

In this step SP13, the control unit 11 detects image capturing conditions, including an exposure value EV and a focal length, that are set when the image capturing unit 13 captures a vein image, generates the image capturing conditions as image capturing condition information, and moves to the next step SP14.

In this step SP14, the control unit 11 extracts, as finger information, a finger width and a histogram from the vein image data given as a result of image capturing in the image capturing unit 13, and moves to the next step SP15.

In this step SP15, the control unit 11 compares the non-vein information described in the attribute certificate AC read from the HDD 14 with the non-vein information to be authenticated extracted from the vein image data so as to perform authentication, and determines whether authentication using non-vein information has successfully been performed. That is, the control unit 11 determines whether the non-vein information read from the HDD 14 matches the non-vein information to be authenticated.

If a negative result is obtained in step SP15, which means that the non-vein information described in the attribute certificate AC read from the HDD 14 does not match the non-vein information to be authenticated extracted from the vein image data, and the control unit 11 moves to step SP19.

In contrast to this, if a positive result is obtained in step SP15, which means that the non-vein information described in the attribute certificate AC read from the HDD 14 matches the non-vein information to be authenticated extracted from the vein image data, so that the control unit 11 moves to the next step SP16.

In this step SP16, the security chip 15 patterns the vein image data that is given as a result of image capturing in the image capturing unit 13, extracts it as vein information, which is a binary image in which the line widths of veins are constant, from a multi-level vein image, and moves to the next step SP17.

In this step SP17, the security chip 15 reads the vein information registered in the memory 33 of the security chip 15, compares the read vein information with the vein information to be authenticated extracted from the vein image data so as to perform authentication, and determines whether authentication using the vein information has successfully been performed. That is, the security chip 15 determines whether the vein information read from the memory 33 matches the vein information to be authenticated.

If a positive result is obtained in step SP17, which means that the vein information read from the memory 33 matches the vein information to be authenticated extracted from the vein image data, so that the security chip 15 moves to the next step SP18.

The control unit 11 executes a predetermined process corresponding to success in authentication in step SP18, and then moves to the next step SP21 to end the process.

In contrast to this, if a negative result is obtained in step SP17, which means that the vein information read from the memory 33 does not match the vein information to be authenticated extracted from the vein image data, so that the security chip 15 moves to the next step SP19.

The control unit 11 executes a predetermined process corresponding to failure in authentication in step SP19, and then moves to the next step SP21 to end the process.

In step SP20, the control unit 11 executes, as a recovery process for obtaining an attribute certificate AC that is not tampered, a reissue process in which an attribute certificate AC that is not tampered is given from the attribute authentication station server 4, for example, and then moves to the next step SP21 to end the process.

### (7) Operation and effect

In the above-described configuration, in this authentication apparatus 2, the control unit 11 obtains non-vein information that is to be used in an authentication process before a vein authentication process, and registers the non-vein information in the HDD 14. Also, the security chip 15 extracts vein information from vein image data and registers the vein information in the memory 33.

Accordingly, in the authentication apparatus 2, the control unit 11 performs authentication using non-vein information and the security chip 15 performs authentication using vein information, whereby authentication using non-vein information and authentication using vein information can be performed in a sharing manner. Thus, an authentication time can be shortened.

Also, in the authentication apparatus 2, non-vein information is registered in the HDD 14, so that non-vein information does not need to be registered in the memory 33 of the security chip 15. Therefore, the occupancy of the memory of the security chip 15 can be reduced accordingly.

In the authentication apparatus 2, even in a case where the control unit 11 performs authentication using non-vein information and where the security chip 15 starts authentication using vein information after obtaining a result of the authentication, the control unit 11 having a processing ability higher than that of the security chip 15 performs authentication using non-vein information, so that the security chip 15 does not perform authentication using non-vein information and that an authentication time can be shortened accordingly.

In the authentication apparatus 2, the control unit 11 extracts finger information from vein image data and registers the finger information as non-vein information in the HDD 14. Accordingly, even if the finger information is stolen, vein information itself cannot be read from the finger information. Thus, in the authentication apparatus 2, the control unit 11 can perform authentication using finger information while maintaining the confidentiality of vein information and can deny vein image data that is highly possible to be data of anyone else.

In the authentication apparatus 2, the control unit 11 reads image capturing condition information as non-vein information from the HDD 14 when performing authentication using non-vein information. Accordingly, the authentication apparatus 2 can use the image capturing condition information not only as information to be used in an authentication process before a vein authentication process but also as a set value of the image capturing unit 13.

In this case, when capturing an image of a finger to be authenticated, the authentication apparatus 2 can set image capturing conditions using the image capturing condition information registered in the HDD 14 without detecting again optimum image capturing conditions. Therefore, the time for detecting optimum image capturing conditions can be saved and the authentication time can be shortened accordingly.

In the authentication apparatus 2, the security chip 15 is constituted by a tamper-resistant chip or the like. Therefore, the security chip 15 prevents theft of vein information. Even if the processing ability of the security chip 15 is lower than that of the control unit 11 due to the prevention of theft, the control unit 11 performs authentication using vein information with which authentication has successfully been performed, and thus an authentication time can be shortened accordingly.

In the authentication apparatus 2, when the control unit 11 stores non-vein information in the HDD 14, the control unit 11 registers, in the HDD 14, the non-vein information as an attribute certificate AC that is digitally-signed in the attribute authentication station server 4. Accordingly, when authentication is performed by the control unit 11 using non-vein information, the authentication apparatus 2 can verify an attribute certificate AC using a public key for signature of the attribute authentication station server 4, and thus can determine whether the attribute certificate AC is tampered. Therefore, in the authentication apparatus 2, erroneous authentication in which even anyone else is successfully authenticated, which occurs in a case where non-vein information is tampered, can be prevented.

In the authentication apparatus 2, in a case where an attribute certificate AC is tampered, a reissue process is executed as a recovery process, whereby an attribute certificate AC that is not tampered is given from the attribute authentication station server 4. Thus, failure in authentication of even an identical person can be prevented.

According to the above-described configuration, non-vein information is registered in the HDD 14 and vein information is registered in the memory 33, whereby the authentication apparatus 2 in which the occupancy of the memory can be reduced can be realized. Also, the control unit 11 performs authentication using non-vein information and then the security chip 15 performs authentication using vein information, whereby the authentication apparatus 2 capable of shortening an authentication time can be realized.

### (8) Other embodiments

In the above-described embodiment, a description has been given about a case where a finger is applied as a living body portion, but the present invention is not limited thereto. For example, a palm, a toe, an arm, an eye, or the like may also be applied.

In this case, instead of finger information used as non-vein information, information extracted from vein image data of an applied portion, such as a palm, a toe, an arm, an eye, or the like may be registered and authenticated as non-vein information.

Also, in the above-described embodiment, a description has been given about a case where blood vessels are applied as biometric information, but the present invention is not limited thereto. For example, a fingerprint, a lip print, a nerve, or the like, may also be applied.

Furthermore, in the above-described embodiment, a description has been given about a case where the patterning unit 31 sequentially performs preprocessing, a sharpening process, a binarizing process, and a thinning process on vein image data, but the present invention is note limited thereto. One or more of those processes may be omitted or may be replaced by another process, or a new process may be added to those processes. In addition, the order of those processes can be changed as necessary.

Furthermore, in the above-describe embodiment, a description has been given about a case where the drive unit 21 performs setting in the image capturing unit 13 and where conditions set thereby are detected by the image capturing condition detecting unit 24, but the present invention is not limited thereto. The image capturing condition detecting unit 24 may perform setting in the image capturing unit 13 instead of detecting image capturing conditions, and may extract the set conditions as image capturing condition information.

Furthermore, in the above-described embodiment, a description has been given about a case where an exposure value EV and a focal length are detected as image capturing conditions, but the present invention is not limited thereto. One of the exposure value EV and focal length may be detected. Also, the wavelength of near infrared light in the image capturing unit 13 may be adjusted by the drive unit 21, and the wavelength or the like of the near infrared light when a vein image is captured may be detected.

Furthermore, in the above-described embodiment, a description has been given about a case where a finger width and a histogram are extracted as image conditions, but the present invention is not limited thereto. One of a finger width and a histogram may be extracted, or a joint distance or the like between a first joint and a second joint of a finger may be extracted from vein image data.

Furthermore, in the above-described embodiment, a description has been given about a case where image capturing condition information and finger information are registered and authenticated as non-vein information, but the present invention is not limited thereto. One of image capturing condition information and finger information may be registered and authenticated as a preprocessing condition.

Furthermore, in the above-described embodiment, a description has been given about a case where the control unit 11 verifies an attribute certificate AC read from the HDD 14 and executes a reissue process as a recovery process if the attribute certificate AC is tampered, but the present invention is not limited thereto. As the recovery process, a backup process may be performed in which an attribute certificate AC is stored in advance in a memory card or the like, and if the attribute certificate AC is tampered, the attribute certificate AC that is not tampered is read from the memory card.

Furthermore, in the above-described embodiment, a description has been given about a case where an attribute certificate AC to which a signature is given by the attribute authentication station server 4 is stored in the HDD 14 when non-vein information is recorded on the HDD 14, but the present invention is not limited thereto. A reliable external agency as a third party that is not the attribute authentication station server 4 may provide a signature to a certificate in which non-vein information is described, and the certificate with the signature may be stored in the HDD 14.

Furthermore, in the above-described embodiment, a description has been given about a case where an attribute certificate AC to which a signature is provided by the attribute authentication station server 4 is stored in the HDD 14 when non-vein information is recorded in the HDD 14, but the present invention is not limited thereto. The control unit 11 may encrypt non-vein information and store the encrypted non-vein information in the HDD 14.

Furthermore, in the above-described embodiment, a description has been given about a case where an attribute certificate AC to which a signature is provided by the attribute authentication station server 4 is stored in the HDD 14 when non-vein information is recorded in the HDD 14, but the present invention is not limited thereto. The non-vein information may be stored in the HDD 14 without providing a signature thereto.

Furthermore, in the above-described embodiment, a description has been given about a case where the above-described registration process procedure or authentication process procedure is executed in accordance with the programs stored in the memory of the control unit 11 and the memory 33 of the security chip 15, but the present invention is not limited thereto. The above-described registration process procedure or authentication process procedure may be executed in accordance with programs obtained by installing them from a program storage medium, such as a CD (Compact Disc), a DVD (Digital Versatile Disc), or a semiconductor memory, or downloading them from a program providing server on the Internet.

Furthermore, in the above-described embodiment, a description has been given about a case where the authentication apparatus 2 serving as the registration apparatus and authentication apparatus of the present invention is constituted by the non-vein information obtaining unit 22 as an obtaining unit, the non-vein information registration unit 23 as a non-biometric registration unit, the patterning unit 31 as an extracting unit, the vein information registration unit 32 as a biometric registration unit, the non-vein authentication unit 27 as a non-biometric determination unit, the vein authentication unit 35 as a biometric determination unit, the HDD 14 as a first storage unit, and the memory 33 as a second storage unit. However, the present invention is not limited thereto. An obtaining unit, a non-biometric registration unit, an extracting unit, a biometric registration unit, a non-biometric determination unit, a biometric determination unit, a first storage unit, and a second storage unit having other various configurations may be constituted.

### Industrial Applicability

The present invention can be used in the field of performing biometric authentication.

## Claims

1. A registration apparatus **characterized by** comprising:
an obtaining unit that obtains non-biometric information that is not about a living body portion serving as a target of biometric authentication from biometric image data;
a non-biometric registration unit that registers the non-biometric information obtained by the obtaining unit in a first storage unit;
an extracting unit that is included in a block in which a security level is higher than in the obtaining unit, the non-biometric registration unit, and the first storage unit and that extracts information about a living body from the biometric image data; and
a biometric registration unit that is included in the block and that registers the information about the living body extracted by the extracting unit in a second storage unit in the block.

2. The registration apparatus according to Claim 1, **characterized in that**
the obtaining unit obtains both or one of an image capturing condition for veins, the condition being set in an image capturing unit, and information about a finger in a vein image output from the image capturing unit, and that
the extracting unit extracts information about veins from the vein image.

3. The registration apparatus according to Claim 1, **characterized in that**
the non-biometric registration unit registers the non-biometric information and an identifier that is generated by an authentication station outside the registration apparatus and that is for detecting tampering of the non-biometric information.

4. An authentication apparatus **characterized by** comprising:
an obtaining unit that obtains non-biometric information that is not about a living body portion serving as a target of biometric authentication from biometric image data;
a non-biometric determination unit that determines whether the non-biometric information obtained by the obtaining unit matches non-biometric information registered in a first storage unit;
an extracting unit that is included in a block in which a security level is higher than in the obtaining unit, the non-biometric determination unit, and the first storage unit and that extracts information about a living body from the biometric image data; and
a biometric determination unit that is included in the block and that determines, in a case where the non-biometric determination unit determines matching, whether the information about the living body extracted by the extracting unit matches information about a living body registered in a second storage unit in the block.

5. The authentication apparatus according to Claim 4, **characterized in that**
the obtaining unit obtains both or one of an image capturing condition for veins, the condition being set in an image capturing unit, and information about a finger in a vein image output from the image capturing unit, and that
the extracting unit extracts information about veins from the vein image.

6. The authentication apparatus according to Claim 4, **characterized in that**
the non-biometric information registered in the first storage unit includes an image capturing condition, and that
the obtaining unit sets the image capturing condition in an image capturing unit and obtains non-biometric information that is not about a living body portion serving as a target of biometric authentication from biometric image data output from the image capturing unit in which setting has been performed.

7. The authentication apparatus according to Claim 4, **characterized in that**
the extracting unit starts extracting the information about the living body, with a time when the non-biometric determination unit determines matching being a trigger.

8. The authentication apparatus according to Claim 4, **characterized in that**
the non-biometric information and an identifier that is generated by an authentication station outside the authentication apparatus and that is for detecting tampering of the non-biometric information are stored in the first storage unit, and that the non-biometric determination unit updates the non-biometric information and the identifier when detecting tampering of the non-biometric information on the basis of the identifier.

9. A registration method **characterized by** comprising:
a first step of obtaining, with an obtaining unit, non-biometric information that is not about a living body portion serving as a target of biometric authentication from biometric image data;
a second step of registering, with a non-biometric registration unit, the non-biometric information obtained in the first step in a first storage unit;
a third step of extracting, with an extracting unit that is included in a block in which a security level is higher than in the obtaining unit, the non-biometric registration unit, and the first storage unit, information about a living body from the biometric image data; and
a fourth step of registering, with a biometric registration unit that is included in the block, the information about the living body extracted in the third step in a second storage unit in the block.

10. An authentication method **characterized by** comprising:
a first step of obtaining, with an obtaining unit, non-biometric information that is not about a living body portion serving as a target of biometric authentication from biometric image data;
a second step of determining, with a non-biometric determination unit, whether the non-biometric information obtained in the first step matches non-biometric information registered in a first storage unit;
a third step of extracting, with an extracting unit that is included in a block in which a security level is higher than in the obtaining unit, the non-biometric determination unit, and the first storage unit, information about a living body from the biometric image data; and
a fourth step of determining, with a biometric determination unit that is included in the block, in a case where the non-biometric determination unit determines matching, whether the information about the living body extracted in the third step matches information about a living body registered in a second storage unit in the block.
